# EUROPEAN PATENT SPECIFICATION

(11) **EP 3 730 444 B1**
(45) Date of publication and mention of the grant of the patent: **18.11.2026**
(21) Application number: 19215379.9
(22) Date of filing: 11.12.2019
(51) Int. Cl.: B66B 7/00

(54) **CLOSED LOOP CONTROL WIRELESS POWER TRANSMISSION SYSTEM FOR CONVEYANCE SYSTEM**
SYSTEM ZUR DRAHTLOSEN STROMÜBERTRAGUNG MIT GESCHLOSSENEM REGELKREIS FÜR FÖRDERSYSTEM
SYSTÈME DE TRANSMISSION DE PUISSANCE SANS FIL DE COMMANDE EN BOUCLE FERMÉE ET POUR SYSTÈME DE TRANSPORT

(30) Priority: 14.12.2018 US 201862779513 P
(43) Date of publication of application: 28.10.2020
(73) Proprietor: Otis Elevator Company, Farmington, Connecticut 06032 (US)
(72) Inventor: MANES, Enrico, East Hartford, CT Connecticut 06108 (US); DWARI, Suman, East Hartford, CT Connecticut 06108 (US); SAVULAK, Stephen, East Hartford, CT Connecticut 06108 (US); DJUKNIC, Goran, East Hartford, CT Connecticut 06108 (US)
(74) Representative: Dehns

(56) References cited:
- JP-A- 2015 082 963
- US-A1- 2001 017 234
- US-A1- 2002 053 490
- US-A1- 2003 090 238
- US-A1- 2014 084 846
- US-A1- 2015 314 984
- US-A1- 2017 005 497

## Description

### BACKGROUND

The embodiments herein relate to the field of conveyance systems, and specifically to a method and apparatus for powering a conveyance system.

Conveyance systems, such as, for example, elevator systems, escalator systems, and moving walkways require electric power for operation. Travelling cables typically connect an elevator car of the elevator system to a stationary power source to provide power to the elevator car. Travelling cables add expense, weight, and complexity to elevator car operation and installation, thus improved methods of powering elevator cars are desired.

US 2015/314984 A1 relates to a wireless power transmission system for an elevator that includes at least two wireless power sources disposed at intervals along a wall of an elevator shaft and coupled to a power supply, and at least one wireless power receiving device configured to be mounted to an exterior of an elevator cab and to be coupled to a load onboard the elevator cab, where during operation, the at least two wireless power sources are configured to generate an oscillating magnetic field to transfer wireless energy to the at least one wireless power receiving device.

JP 2015 082963 A relates to a wireless power transmission system that performs power transmission between a power reception unit provided on a mobile body moving on a track and a power transmission unit provided on the track.

### BRIEF SUMMARY

A wireless power transfer system for wirelessly powering a conveyance apparatus of a conveyance system is provided in accordance with claim 1.

In addition to one or more of the features described herein, further embodiments may include that the conveyance system is an elevator system and the conveyance apparatus is an elevator car.

In addition to one or more of the features described herein, further embodiments may include that the side is a wall of an elevator shaft of the elevator system.

In addition to one or more of the features described herein, further embodiments may include that the wireless electrical power transmitter is configured to wirelessly transmit electrical power to the wireless electrical power receiver when the wireless electrical power receiver is located proximate the first location.

In addition to one or more of the features described herein, further embodiments may include that the energy storage device is a battery system.

According to another embodiment a conveyance system is provided in accordance with claim 6.

In addition to one or more of the features described herein, further embodiments may include that the conveyance system is an elevator system and the conveyance apparatus is an elevator car.

In addition to one or more of the features described herein, further embodiments may include that the side is a wall of an elevator shaft of the elevator system.

In addition to one or more of the features described herein, further embodiments may include that the wireless electrical power transmitter is configured to wirelessly transmit electrical power to the wireless electrical power receiver when the wireless electrical power receiver is located proximate the first location.

In addition to one or more of the features described herein, further embodiments may include that the energy storage device is a battery system.

Technical effects of embodiments of the present disclosure include powering elevator cars of an elevator system wirelessly and controlling the flow of power via a closed loop architecture.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 is a schematic illustration of a wireless power transfer system for the elevator system of FIG. 1, in accordance with an embodiment of the disclosure; and
FIG. 3 is an enlarged view of wireless communication within the wireless power transfer system of FIG. 2, in accordance with an embodiment of the disclosure.

### DETAILED DESCRIPTION

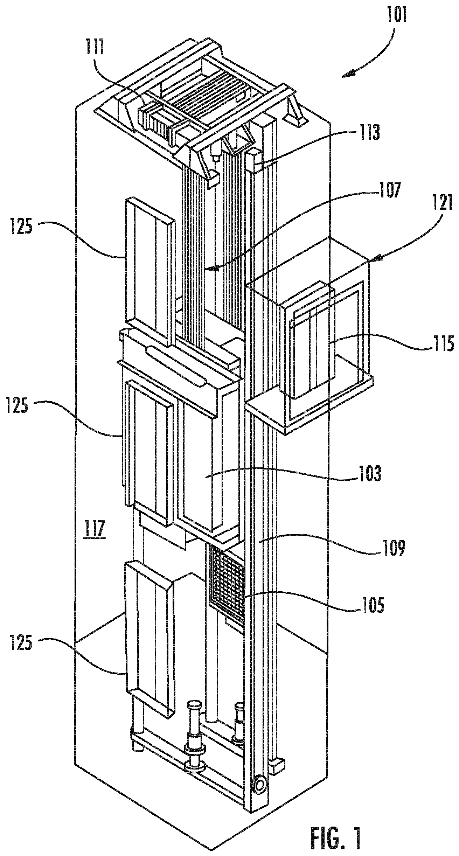

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system.

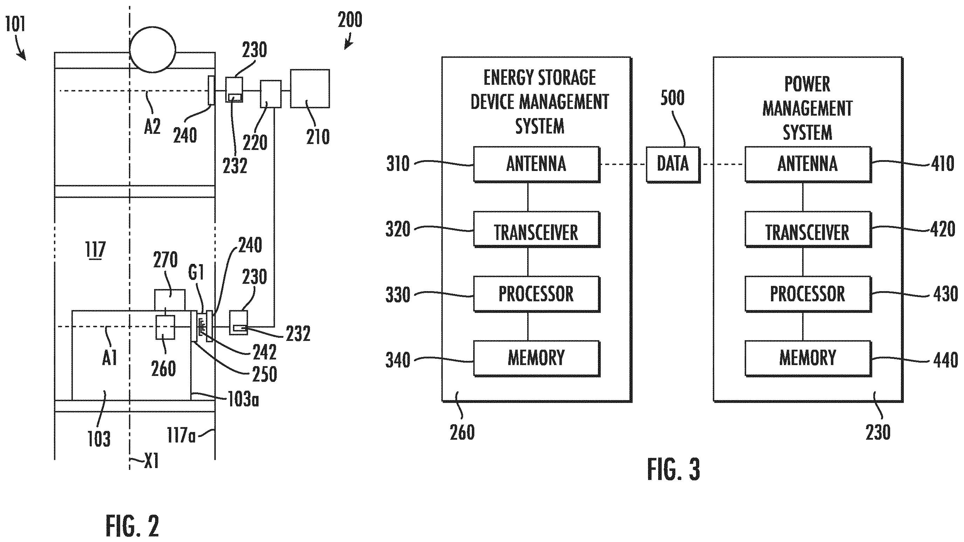

Referring now to FIGs. 2-3 with continued reference to FIG. 1, a view of a wireless power transfer system 200 for use with the elevator system 101 of FIG.1 is illustrated, in accordance with an embodiment of the present disclosure. It should be appreciated that, although particular systems are separately defined in the schematic block diagrams, each or any of the systems may be otherwise combined or separated via hardware and/or software. The wireless power transfer system 200 may include a power source 210, an AC/DC power converter 220, a power management system 230, a wireless electrical power transmitter 240, a wireless electrical power receiver 250, an energy storage device management system 260, and an energy storage device 270. An energy storage device 270 may not be required if energy harvesting is used.

The power source 210 may be a stationary power source, such as, for example electrical grid power, wind power, solar power, generator power, etc. The power source 210 may provide electrical power using alternating current (AC). The AC electrical power provided by the power source 210 may be three phase AC for higher power greater than about 3kW. The AC/DC power converter 220 is configured to receive the AC electric power from the power source 210 and convert the AC electrical power into DC electrical power. The AC/DC power converter 220 is electrically connected to the power source 210. The electrical connection between the AC/DC power converter 220 and the power source 210 may be hardwired.

The power management system 230 is electrically connected to the AC/DC power converter 220. The electrical connection between the power management system 230 and the AC/DC power converter 220 may be hardwired. The power management system 230 operates as a power controller to supply the power needs of the elevator car 103 proximate a first location A1 and a second location A2. The first location A1 and the second location A2 may be planes through the elevator shaft 117 about perpendicular to an axis X1 that runs parallel to the elevator shaft 117. The power management system 230 controls switching, directing, or redirecting power to the elevator car 103 through one or more wireless power transmitters 240 as needed to satisfy the power requirements of the elevator car 103. Switching, directing, and redirecting may readily be accomplished employing a bus control switching device 232 of the power management system 230. The bus control switching device 232 may include, but not be limited to, electromechanical and solid state semiconductor switching devices including relays, contactors, solid state contactors as well as semiconductor switching devices such as transistors, FETs, MOSFETS, IGBT's, thyristors, SCR's, and the like. In addition, to facilitate and implement the functionality of the power management system 230, the voltages and frequencies of the power supplied by the power source 210 may be adjusted by the bus control switching device 232. The wireless power transmitters 240 later adjusts the frequency of the electrical power to satisfy the needs of the elevator car 103. The wireless electrical power transmitter 240 may be intelligent enough to identify the resonant frequency and power flow between and adjust frequencies to meet requested power flow. The intelligence could also be with the wireless electrical power transmitter 240 in the sensing of the current being transmitted. The wireless electrical power transmitter 240 may be intelligent enough to identify the resonant frequency and power flow between and adjust frequencies to meet requested power flow. The intelligence could also be with the wireless electrical power transmitter 240 in the sensing of the current being transmitted.

The wireless power transfer system 200 may include one or more wireless electrical power transmitters 240, as shown in FIG. 2. The electrical power transmitters 240 are electrically connected to the power management system 230. The electrical connection between the electrical power transmitter 240 and the power management system 230 may be hardwired. The wireless electrical power transmitter 240 may be located at different locations along a side of an elevator shaft 117. The side may be a wall 117a of the elevator shaft 117. In the example shown in FIG. 2, two wireless electrical power transmitter 240 are illustrated, including a wireless electrical power transmitter 240 is located at a first location A1 along a wall 117a of the elevator shaft 117 and a wireless electrical power transmitter 240 is located at a second location A2 along a wall 117a of the elevator shaft 117. The wireless electrical power transmitter 240 may be attached to the wall 117a or embedded in the wall 117a, or in any other desired arrangement. The wireless electrical power transmitter 240 may include a selected number of electrical coils configured to generate a magnetic field 242 when electrical power is run through the electrical coils. The electrical coils of the wireless electrical power transmitter 240 are not shown in FIG. 2 for simplification of the illustration.

The wireless power transfer system 200 may include one or more wireless electrical power receivers 250, as shown in FIG. 2. The wireless electrical wireless electrical power receivers 250 may be located at different locations along a surface 103a of the elevator car 103. The wireless electrical power receivers 250 may be attached to the surface 103a of the elevator car 103 or embedded in the surface 103a of the elevator car 103. The surface 103a of the elevator car 103 is located opposite the wall 117a of the elevator shaft 117 where the wireless electrical power transmitter 240 is located. Therefore, when the elevator car 103 and the wireless electrical power receivers 250 are located proximate the first location A1, the wireless electrical power receivers 250 and the wireless electrical power transmitter 240 at the first location A1 are in a facing spaced relationship and a gap G1 is formed therebetween. The gap G1 is formed between the wireless electrical power receivers 250 and the wireless electrical power transmitter 240 at the first location A1, as shown in FIG. 2. Likewise, when the elevator car 103 and the wireless electrical power receivers 250 are located proximate the second location A2, the wireless electrical power receivers 250 and the wireless electrical power transmitter 240 at the second location A2 are in a facing spaced relationship. The gap G1 will also be present between the wireless electrical power receivers 250 and the wireless electrical power transmitter 240 at the second location A2. The wireless electrical power receivers 250 may include a selected number of electrical coils configured to generate an electric power in response to the magnetic field 242 when the wireless electrical power receiver 250 is within the transmission range of the magnetic field 242 generated by the wireless electrical power transmitter 240. The electrical coils of the wireless electrical power receiver 250 are not shown in FIG. 2 for simplification of the illustration.

The electrical power receivers 250 are electrically connected to the energy storage device management system 260. The electrical connection between the electrical power receiver 250 and the energy storage device management system 260 may be hardwired. The energy storage device management system 260 is configured to condition the electrical power received from the electrical power receivers 250 and transfer the electrical power to the energy storage device 270 as needed. The energy storage device management system 260 monitors data 500 (see FIG. 3) of the energy storage device 270 and the elevator car 103 which includes the state of charge of the energy storage device 270, a state of health of the energy storage device 270, a temperature of the energy storage device 270, dispatching of the elevator car 103, a location of the elevator car 103, and a location of the wireless electrical power receiver 250 relative to the wireless electrical power transmitter 240. Examples of the energy storage device 270 may include a battery system (e.g., a battery or bank of batteries), fuel cells, flow battery, and others devices capable of storing and outputting electric energy that may be DC. In one embodiment, the energy storage device 270 may store potential energy rather than electrical energy and that potential energy may be utilized to create electrical energy for the elevator car 103a, 130b. The energy storage device 270 may include a battery system, which may employ multiple batteries organized into battery banks. The energy storage device 270 is electrically connected to the elevator car 103. The electrical connection between the energy storage device 270 and the elevator car 103 may be hardwired. The energy storage device 270 may power lighting inside the elevator car 103, fans, an emergency phone, climate controls, communication system, and/or the operating panel of the elevator car 103. The operating panel of the elevator car 103 may consists of floor buttons, a door open button, a door close button, other similar buttons, or may be a touchscreen.

Referring now to FIG. 3, with continued reference to FIGs. 1-2, a block diagram illustrating communication between the power management system 230 and energy storage device management system 260. It should be appreciated that, although particular systems are separately defined in the schematic block diagrams, each or any of the systems may be otherwise combined or separated via hardware and/or software.

The power management system 230 generally includes an antenna 410, a transceiver 420, a processor 430, and a memory 440. The transceiver 410 is capable of transmitting and receiving data to and from the energy storage management system 260. The transceiver 420 may, for instance, be a near field communication (NFC), Bluetooth, infrared, ZigBee, laser, infrared, or Wi-Fi transceiver, or another appropriate wireless transceiver. The antenna 410 is any antenna appropriate to the transceiver 420. The processor 430 and memory 440 are, respectively, data processing, and storage devices. The memory 440 may be RAM, EEPROM, or other storage medium where the processor 430 can read and write data 500.

The energy storage device management system 260 generally includes an antenna 310, a transceiver 320, a processor 330, and a memory 340. The transceiver 310 is capable of transmitting and receiving data to and from the power management system 230. The transceiver 320 may, for instance, be a near field communication (NFC), Bluetooth, infrared, ZigBee, laser, infrared, or Wi-Fi transceiver, or another appropriate wireless transceiver. The antenna 310 is any antenna appropriate to the transceiver 320. The processor 330 and memory 340 are, respectively, data processing, and storage devices. The memory 340 may be RAM, EEPROM, or other storage medium where the processor 330 can read and write data 500.

The energy storage device management system 260 may wirelessly transmit data 500 to the power management system 230 in a closed feedback loop. The data 500 may be transmitted periodically, intermittently, or in real time. The power management system 230 may adjust the wireless transmission of electrical power from the wireless electrical power transmitter 240 to the wireless electrical power receiver 250 in response to the data 500. The data 500 depicts performance and operation of the elevator car 103 and the energy storage device 270 including but not limited to the state of charge of the energy storage device 270, a state of health of the energy storage device 270, a temperature of the energy storage device 270, dispatching of the elevator car 103, a location of the elevator car 103, and a location of the wireless electrical power receiver 250 relative to the wireless electrical power transmitter 240. The power management system 230 adjusts the power and voltage of electricity being induced through the coils of the wireless electrical power transmitter 240 in response to the data 500. In one example, the power management system 230 may only induce an electrical current through the coils of the wireless electrical power transmitter 240 when the wireless electrical power receiver 250 is within a transmission range of the wireless electrical power transmitter 240. In another example, the power management system 230 may increase the electrical current through the coils of the wireless electrical power transmitter 240 when the energy storage device 270 is low on electrical power. The power management system 230 may dispatch the elevator car 103 to a location of the wireless electrical power transmitter 240 for charging when it determines that the energy storage device 270 is low on energy.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A wireless power transfer system (200) for wirelessly powering a conveyance apparatus (103) of a conveyance system (101), the wireless power transfer system (200) comprising:
a wireless electrical power transmitter (240) located along a side of the conveyance system (101) in a first location (A1);
a power management system (230) configured to control operation of the wireless electrical power transmitter (240);
a wireless electrical power receiver (250) located along a surface of the conveyance apparatus (103) opposite the side, the wireless electrical power receiver (250) and the wireless electrical power transmitter (240) being in a facing spaced relationship defining a gap (G1) therebetween when the wireless electrical power receiver (250) is located proximate the first location (A1);
an energy storage device (270) configured to receive electrical power from the wireless electrical power receiver (250);
an energy storage device management system (260) configured to monitor data (500) of the energy storage device (270) and the conveyance apparatus (103), the energy storage device management system (260) being in wireless communication with the power management system (230),
wherein the energy storage device management system (260) is configured to transmit the data (500) to the power management system (230);
**characterized in that**:
the power management system (230) is configured to adjust operation of the wireless electrical power transmitter (240) in response to the data (500) by adjusting power, frequency and voltage of electricity being induced through coils of the wireless electrical power transmitter (240), wherein the data (500) includes the state of charge of the energy storage device (270), a state of health of the energy storage device (270), a temperature of the energy storage device (270), dispatching of the conveyance apparatus (103), a location of the conveyance apparatus (103), and a location of the wireless electrical power receiver (250) relative to the wireless electrical power transmitter (240).

2. The wireless power transfer system (200) of claim 1, wherein the conveyance system (101) is an elevator system and the conveyance apparatus (103) is an elevator car.

3. The wireless power transfer system (200) of claim 2, wherein the side is a wall (117a) of an elevator shaft (117) of the elevator system.

4. The wireless power transfer system (200) of any preceding claim, wherein the wireless electrical power transmitter (240) is configured to wirelessly transmit electrical power to the wireless electrical power receiver (250) when the wireless electrical power receiver (250) is located proximate the first location (A1).

5. The wireless power transfer system (200) of any preceding claim, wherein the energy storage device (270) is a battery system.

6. A conveyance system (101), comprising
a conveyance apparatus (103); and
a wireless power transfer system (200) for wirelessly powering the conveyance apparatus (103) of the conveyance system (101, the wireless power transfer system (200) comprising the wireless power transfer system (200) of any preceding claim.

## Patentansprüche

1. Drahtloses Energieübertragungssystem (200) zur drahtlosen Stromversorgung einer Fördereinrichtung (103) eines Fördersystems (101), wobei das drahtlose Energieübertragungssystem (200) umfasst:
einen drahtlosen Sender (240) für elektrische Energie, der entlang einer Seite des Fördersystems (101) an einem ersten Ort (A1) angeordnet ist;
ein Energiemanagementsystem (230), das dazu konfiguriert ist, einen Betrieb des drahtlosen Senders (240) für elektrische Energie zu steuern;
einen drahtlosen Empfänger (250) für elektrische Energie, der entlang einer Oberfläche der Fördereinrichtung (103) gegenüber der Seite angeordnet ist, wobei sich der drahtlose Empfänger (250) für elektrische Energie und der drahtlose Sender (240) für elektrische Energie in einer zugewandten, beabstandeten Beziehung befinden, die einen Spalt (G1) dazwischen definiert, wenn sich der drahtlose Empfänger (250) für elektrische Energie in der Nähe des ersten Orts (A1) befindet;
eine Energiespeichervorrichtung (270), die dazu konfiguriert ist, elektrische Energie von dem drahtlosen Empfänger (250) für elektrische Energie zu empfangen;
ein Energiespeichervorrichtungsmanagementsystem (260), das dazu konfiguriert ist, Daten (500) der Energiespeichervorrichtung (270) und der Fördereinrichtung (103) zu überwachen, wobei das Energiespeichervorrichtungsmanagementsystem (260) in drahtloser Kommunikation mit dem Energiemanagementsystem (230) steht,
wobei das Energiespeichervorrichtungsmanagementsystem (260) dazu konfiguriert ist, die Daten (500) an das Energiemanagementsystem (230) zu übertragen;
**dadurch gekennzeichnet, dass**:
das Energiemanagementsystem (230) dazu konfiguriert ist, den Betrieb des drahtlosen Senders (240) für elektrische Energie als Reaktion auf die Daten (500) durch Einstellen von Leistung, Frequenz und Spannung von Elektrizität, die durch Spulen des drahtlosen Senders (240) für elektrische Energie induziert wird, einzustellen, wobei die Daten (500) den Ladezustand der Energiespeichervorrichtung (270), einen Gesundheitszustand der Energiespeichervorrichtung (270), eine Temperatur der Energiespeichervorrichtung (270), ein Abfertigen der Fördereinrichtung (103), einen Ort der Fördereinrichtung (103) und einen Ort des drahtlosen Empfängers (250) für elektrische Energie relativ zu dem drahtlosen Sender (240) für elektrische Energie einschließen.

2. Drahtloses Energieübertragungssystem (200) nach Anspruch 1, wobei das Fördersystem (101) ein Aufzugssystem ist und die Fördereinrichtung (103) eine Aufzugskabine ist.

3. Drahtloses Energieübertragungssystem (200) nach Anspruch 2, wobei die Seite eine Wand (117a) eines Aufzugsschachts (117) des Aufzugssystems ist.

4. Drahtloses Energieübertragungssystem (200) nach einem der vorhergehenden Ansprüche, wobei der drahtlose Sender (240) für elektrische Energie dazu konfiguriert ist, elektrische Energie drahtlos an den drahtlosen Empfänger (250) für elektrische Energie zu übertragen, wenn sich der drahtlose Empfänger (250) für elektrische Energie in der Nähe des ersten Orts (A1) befindet.

5. Drahtloses Energieübertragungssystem (200) nach einem der vorhergehenden Ansprüche, wobei die Energiespeichervorrichtung (270) ein Batteriesystem ist.

6. Fördersystem (101), umfassend
eine Fördereinrichtung (103); und
ein drahtloses Energieübertragungssystem (200) zur drahtlosen Stromversorgung der Fördereinrichtung (103) des Fördersystems (101, wobei das drahtlose Energieübertragungssystem (200) das drahtlose Energieübertragungssystem (200) nach einem der vorhergehenden Ansprüche umfasst.

## Revendications

1. Système de transfert de puissance sans fil (200) pour alimenter sans fil un appareil de transport (103) d'un système de transport (101), le système de transfert de puissance sans fil (200) comprenant :
un émetteur de puissance électrique sans fil (240) situé le long d'un côté du système de transport (101) dans un premier emplacement (A1) ;
un système de gestion de puissance (230) configuré pour commander le fonctionnement de l'émetteur de puissance électrique sans fil (240) ;
un récepteur de puissance électrique sans fil (250) situé le long d'une surface de l'appareil de transport (103) opposée au côté, le récepteur de puissance électrique sans fil (250) et l'émetteur de puissance électrique sans fil (240) étant dans une relation espacée face à face définissant un espace (G1) entre eux lorsque le récepteur de puissance électrique sans fil (250) est situé à proximité du premier emplacement (A1) ;
un dispositif de stockage d'énergie (270) configuré pour recevoir de la puissance électrique à partir du récepteur de puissance électrique sans fil (250) ;
un système de gestion de dispositif de stockage d'énergie (260) configuré pour surveiller des données (500) du dispositif de stockage d'énergie (270) et de l'appareil de transport (103), le système de gestion de dispositif de stockage d'énergie (260) étant en communication sans fil avec le système de gestion de puissance (230),
dans lequel le système de gestion de dispositif de stockage d'énergie (260) est configuré pour transmettre les données (500) au système de gestion de puissance (230) ;
**caractérisé en ce que** :
le système de gestion de puissance (230) est configuré pour régler le fonctionnement de l'émetteur de puissance électrique sans fil (240) en réponse aux données (500) en réglant la puissance, la fréquence et la tension de l'électricité étant induite à travers des bobines de l'émetteur de puissance électrique sans fil (240), dans lequel les données (500) comportent l'état de charge du dispositif de stockage d'énergie (270), un état de santé du dispositif de stockage d'énergie (270), une température du dispositif de stockage d'énergie (270), l'envoi de l'appareil de transport (103), un emplacement de l'appareil de transport (103) et un emplacement du récepteur de puissance électrique sans fil (250) par rapport à l'émetteur de puissance électrique sans fil (240).

2. Système de transfert de puissance sans fil (200) selon la revendication 1, dans lequel le système de transport (101) est un système d'ascenseur et l'appareil de transport (103) est une cabine d'ascenseur.

3. Système de transfert de puissance sans fil (200) selon la revendication 2, dans lequel le côté est une paroi (117a) d'une gaine d'ascenseur (117) du système d'ascenseur.

4. Système de transfert de puissance sans fil (200) selon une quelconque revendication précédente, dans lequel l'émetteur de puissance électrique sans fil (240) est configuré pour transmettre sans fil de la puissance électrique au récepteur de puissance électrique sans fil (250) lorsque le récepteur de puissance électrique sans fil (250) est situé à proximité du premier emplacement (A1).

5. Système de transfert de puissance sans fil (200) selon une quelconque revendication précédente, dans lequel le dispositif de stockage d'énergie (270) est un système de batterie.

6. Système de transport (101), comprenant
un appareil de transport (103) ; et
un système de transfert de puissance sans fil (200) pour alimenter sans fil l'appareil de transport (103) du système de transport (101), le système de transfert de puissance sans fil (200) comprenant le système de transfert de puissance sans fil (200) selon une quelconque revendication précédente.
